Europäisches Patentamt

European Patent Office

Office européen des brevets

(19)

(11) Publication number : **0 443 555 B1**

(12) **EUROPEAN PATENT SPECIFICATION**

(45) Date of publication of patent specification :
18.01.95 Bulletin 95/03

(51) Int. Cl.[6] : **F16D 69/02**

(21) Application number : **91102468.5**

(22) Date of filing : **20.02.91**

(54) **Heat-resistant friction material.**

(30) Priority : **22.02.90 JP 42258/90**

(43) Date of publication of application :
**28.08.91 Bulletin 91/35**

(45) Publication of the grant of the patent :
**18.01.95 Bulletin 95/03**

(84) Designated Contracting States :
**DE FR GB**

(56) References cited :
**EP-A- 0 079 544
EP-A- 0 292 997
US-A- 4 020 226**

(73) Proprietor : **AKEBONO BRAKE INDUSTRY CO., LTD.**
**19-5, Nihonbashi Koami-cho**
**Chuo-ku Tokyo 103 (JP)**
Proprietor : **AKEBONO RESEARCH AND DEVELOPMENT CENTRE LTD.**
**5-4-71, Higashi**
**Hanyu-shi Saitama-ken 348 (JP)**

(72) Inventor : **Seki, Katsuji, Washimiya-danchi 3-12-106,478**
**Ueuchi,**
**Washinomiya-machi**
**Kitakatsushika-gun, Saitama-ken 340-02 (JP)**

(74) Representative : **TER MEER - MÜLLER - STEINMEISTER & PARTNER**
**Mauerkircherstrasse 45**
**D-81679 München (DE)**

**Description**

BACKGROUND OF THE INVENTION

The present invention relates to a friction material (disc pad, lining, facing, etc.) for cars and industrial machines having in particular an improved wear resistance.

Recently, for such friction materials, carbon fibers having excellent performance are used employing various resins as binders (e.g. Japanese Patent Publication No. Sho 38-26574 and Sho 59-4455, US-A-4 020 226, EP-A-0 292 997 and EP-A-0 079 544).

With these conventional friction materials, however, there has been a problem that the combination of resin with carbon fibers cannot be said to be sufficiently good. For example, phenol resin has a poor adhesion to carbon fibers and, though epoxy resin has a good adhesion to carbon fibers, it is poor in the heat resistance, thus they were difficult to apply to the friction materials for cars. Further, the friction material comprised of a carbon fiber-reinforced carbonaceous composite wherein carbon fibers are molded under heat with a phenol resin and then burned is excellent in the heat resistance, but it is hard to mold bringing about a drawback of high-cost.

As a result of extensive investigations on the resin with high adhesion to carbon fibers in view of this situation, a friction material having good moldability and being producible in low-cost has been found by the invention.

SUMMARY OF THE INVENTION

Accordingly, the present invention provides a heat-resistant friction material comprising carbon fibers and a binder resin, which is characterized in that the binder resin is a condensed polycyclic polynuclear aromatic hydrocarbon resin (COPNA resin) obtainable by reacting an aromatic compound (Aro) with p-xyleneglycol (PXG), being a crosslinking agent, in a molar ratio (PXG/Aro) of not less than 1.5.

DETAILED DESCRIPTION OF THE INVENTION

Said condensed polycyclic polynuclear aromatic hydrocarbon resin (hereinafter referred to as COPNA resin) can be obtained by reacting p-xyleneglycol (PXG) being a crosslinking agent with aromatic compounds (Aro) such as naphthalene, phenanthrene, anthracene, pyrene, chrysene, naphthacene, fluoranthen, perylene, picene and alkyl derivatives and hydroxyl derivatives of these compounds being raw material substances. However, this COPNA resin is usually difficult to mold with hot press.

There, the inventor varied the formulation ratio of said PXG to Aro for the reaction to synthesize the COPNA resins and to examine the heat moldability.

Namely, by selecting pyrene. α-naphthol and β-naphthol as Aros and by varying the molar ratio (PXG/Aro) of each one to PXG within a range of 1.0 to 2.0, said COPNA resins were synthesized. And, a mixture formulated from 80 wt. % carbon fibers and 20 wt. % of each COPNA resin, was submitted to the heat molding under the conditions of a press temperature of 170°C, a press pressure of 98 MPa (1000 kg/cm²) and press time of 360 sec. Then, it was further submitted to after-cure under the conditions of 250 °C x 3 hrs. to evaluate the moldability (good moldability was marked with ○ and poor one with x) and to measure the bending strength at the same time. These results are shown in Table 1 for the raw material pyrene, in Table 2 for α-naphthol and in Table 3 for β-naphthol, respectively. Besides, when an ordinary phenol resin was used and submitted to heat molding and after-cure under the same conditions as above, it exhibited good moldability and the bending strength was 44.1 N/mm² (4.5 kg/mm²).

Table 1

| Molar ratio | 1.00 | 1.25 | 1.50 | 1.75 | 2.00 |
|---|---|---|---|---|---|
| Moldability | × | × | ○ | ○ | ○ |
| Bending strength (kg/mm²) (N/mm²) | (2.5) 24.5 | (3.2) 31.4 | (7.0) 68.6 | (6.0) 58.8 | (6.5) 63.7 |

Table 2

| Molar ratio | 1.00 | 1.25 | 1.50 | 1.75 | 2.00 |
|---|---|---|---|---|---|
| Moldability | ✕ | ✕ | ◯ | ◯ | ◯ |
| Bending strength (kg/mm²) (N/mm²) | (5.0) 49 | (5.5) 53.9 | (6.0) 58.8 | (6.5) 63.7 | (6.0) 58.8 |

Table 3

| Molar ratio | 1.00 | 1.25 | 1.50 | 1.75 | 2.00 |
|---|---|---|---|---|---|
| Moldability | ✕ | ✕ | ◯ | ◯ | ◯ |
| Bending strength (kg/mm²) (N/mm²) | (4.5) 44.1 | (5.0) 49 | (6.5) 63.7 | (7.0) 68.6 | (6.0) 58.8 |

From these tables, it can be seen that the moldability is good in the cases of the molar ratio of not less than 1.5. Further, within this range, the bending strength is also sufficiently excellent in comparison with phenol resin.

Moreover, the number average molecular weight with GPC (Gel Permeation Chromatography) is desirable to be around 1000.

The general formulating composition of such friction materials of the invention is 10 to 25 wt. % of COPNA resin, 60 to 90 wt. % of carbon fibers and 0 to 10 wt. % of a friction modifier (acidic or neutral material), and they are mixed in a dry state. The friction material can be produced by molding with a hot press at a temperature of 150 to 170 °C and by submitting to after-cure at a temperature of 200 to 300 °C for 3 to 10 hrs.

Example

In the following, examples of the invention will be illustrated.

Using respective COPNA resins synthesized at a molar ratio of maximum bending strength in Table 1 through Table 3 (referred COPNA resin with a molar ratio of 1.5 among them that gave the results in Table 1 to as resin A, and similarly, COPNA resins with a molar ratio of 1.75 in Table 2 and Table 3 to as resin B and resin C, respectively) and formulating 20 wt. % of said resin, 75 wt. % of carbon fibers and 5 wt. % of a friction modifier, respectively, three types of the inventive friction materials were produced under said conditions. With them, the friction test was performed under the following test conditions to examine the friction coefficient and wear level, the results of which are shown in Table 4.

Type of tester: Inertia type friction tester
Mass of inertia: 0.04 kgf.m.sec²
Initial braking velocity: 65 km/hr
Deceleration: 0.35G (=3.43m/sec²)
Friction-starting temperature: 300 °C
Number of times of braking: 100

Besides, for comparison, also with comparative friction material used ordinary phenol resin and produced in the same formulation composition and under the same production conditions as above, same test was performed and the results are also put down in Table 4.

Table 4

| Resin | Resin A | Resin B | Resin C | Phenol resin |
|---|---|---|---|---|
| μ | 0.29 | 0.31 | 0.33 | 0.23 |
| Wear (mm) | 0.08 | 0.12 | 0.10 | 2.50 |
| Molar ratio | 1.50 | 1.75 | 1.75 | — |
| Friction surface | Smooth surface | Smooth surface | Smooth surface | Rough |

As evident from Table 4, it can be seen that, with the inventive friction mateials made of COPNA resin, the wear is exceptionally low over the comparative friction material made of phenol resin. This is due to the following reason. As is obvious from microscopic observation of the fracture surface of said inventive friction materials and comparative friction material, the fracture surface of the inventive friction materials shows that the resins adhere around the carbon fibers in close contact. On the contrary, in the fracture surface of the comparative friction material, the carbon fibers look like they are pulled out from the phenol resin resulting in no adhesion between resin and carbon fibers.

As described, in accordance with the invention, such remarkable effects are exerted industrially that the wear resistance is improved in the friction materials containing carbon fibers, yet, because of good moldability with a press, such friction materials can be produced at low cost.

## Claims

1. A heat resistant friction material comprising carbon fibers and a binder resin, **characterized in that** the binder resin is a condensed polycyclic polynuclear aromatic hydrocarbon resin (COPNA resin) obtainable by reacting an aromatic compound (Aro) with p-xyleneglycol (PXG), being a crosslinking agent, in a molar ratio (PXG/Aro) of not less than 1.5.

## Patentansprüche

1. Hitzebeständiges Reibmaterial, welches Kohlenstoffasern und ein Bindemittelharz umfaßt, **dadurch gekennzeichnet**, daß das Bindemittelharz ein kondensiertes polycyclisches mehrkerniges aromatisches Kohlenwasserstoffharz (COPNA-Harz) ist, welches durch Umsetzen einer aromatischen Verbindung (Aro) mit p-Xylolglykol (PXG), das ein Vernetzungsmittel ist, in einem molaren Verhältnis (PXG/Aro) von nicht weniger als 1,5 erhältlich ist.

## Revendications

1. Matériau de friction résistant à la chaleur comportant des fibres de carbone et une résine liante, caractérisé en ce que la résine liante est une résine d'hydrocarbure aromatique polynucléaire polycyclique condensée (résine COPNA) que l'on obtient en faisant réagir un composé aromatique (Aro) avec du p-xylèneglycol (PXG) comme agent de réticulation, dans un rapport molaire (PXG/Aro) non inférieur à 1,5.